# EUROPEAN PATENT SPECIFICATION

(11) **EP 3 586 608 B1**
(45) Date of publication and mention of the grant of the patent: **14.04.2021**
(21) Application number: 19182593.4
(22) Date of filing: 26.06.2019
(51) Int. Cl.: A01G 23/081

(54) **BUNCH ACCUMULATOR FOR ENERGY WOOD GRAPPLE AND ENERGY WOOD GRAPPLE**
SPEICHER FÜR ENERGIEHOLZGREIFER UND ENERGIEHOLZGREIFER
ACCUMULATEUR POUR GRAPPIN À BOIS D'ÉNERGIE ET GRAPPIN À BOIS D'ÉNERGIE

(30) Priority: 26.06.2018 FI 20185572
(43) Date of publication of application: 01.01.2020
(73) Proprietor: Jak-Metalli OY, 35820 Mänttä (FI)
(72) Inventor: TOSSAVAINEN, Kimmo, 44200 Suolahti (FI)
(74) Representative: Kespat Oy

(56) References cited:
- EP-A1- 2 322 032
- CA-A- 1 077 087
- FI-B- 123 154
- FI-B- 126 358
- US-A1- 2008 017 273

## Description

The object of the invention is a bunch accumulator for an energy wood grapple, which bunch accumulator includes two collection members, and between the respective collection members is provided an opposite linear motion. An object of the invention is also an energy wood grapple.

In its simplest form, the energy wood grapple has a pivotable gripper, with which energy wood is pressed against a cutting blade. This way, it is possible to cut the energy wood. It is also possible to manipulate the segments of cut energy wood with the gripper, in practice place them in piles or load them. The energy wood grapple can also accumulate energy wood with the bunch accumulator, so that, when the gripper is opened, the energy wood remains under control and the energy wood grapple can be moved to the location of the next tree in order to cut more energy wood.

Known bunch accumulators have two pivotable collection members, with which the energy wood is pressed against the energy wood grapple. For the release of its grasp, the collection member is additionally articulated into two parts so that the opening collection member avoids the energy wood in the grip of the energy wood grapple.

The collection members are protruding structures and susceptible to breakage. Moreover, the range of motion of the collection members is wide, which slows down bunch accumulation. In particular segments of energy wood with a small diameter remain loosely in the grip of the collection members. FI patent publication 123154 B discloses a bunch accumulator according to the preamble of the Claim 1.

It is the object of the invention to provide a novel bunch accumulator for an energy wood grapple which holds segments of energy wood in its grip better than before and which requires less space than in the past. In addition, it is the object of the invention to provide a novel energy wood grapple, which is more versatile and faster to use than before. The features of the bunch accumulator in accordance with this invention are indicated in the attached claim 1. The features of the corresponding energy wood grapple in accordance with the invention are indicated in the attached claim 13. The structure and range of motion of the collection members in the bunch accumulator in accordance with the invention are realized in a new and surprising way. The structure of the bunch accumulator has thus been rendered compact and robust. Moreover, segments of wood of different sizes are kept firmly under control. The operation of the collection members is rendered more efficient especially at the end of a working motion so that small segments of wood are also kept under control. The operation of the bunch accumulator is also fast and easy to control.

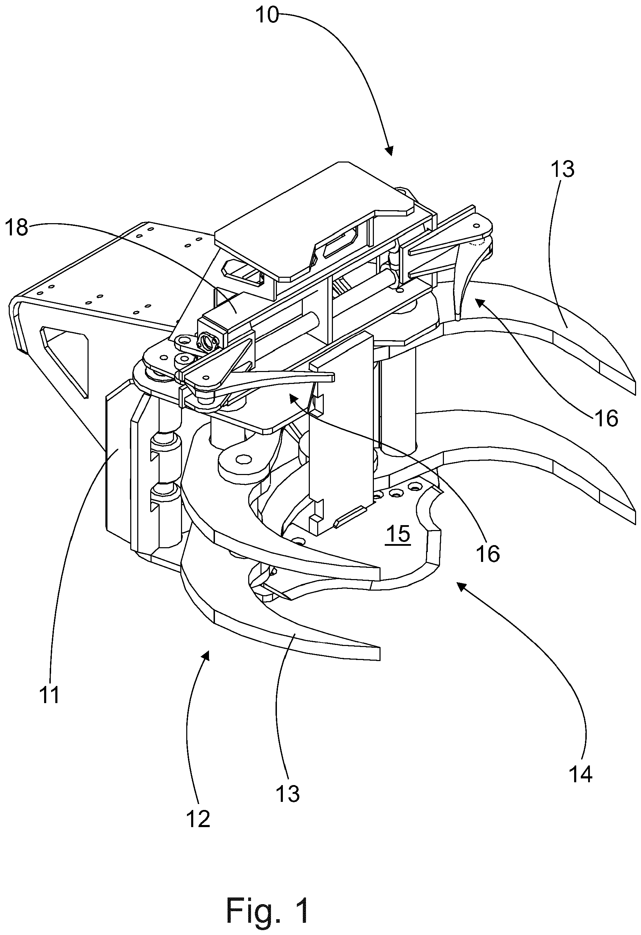

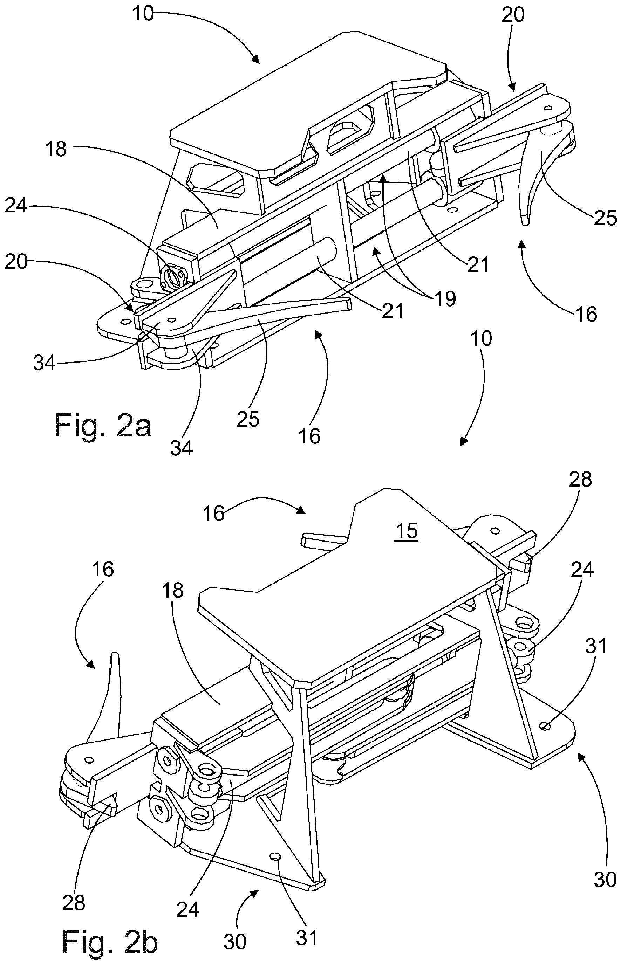

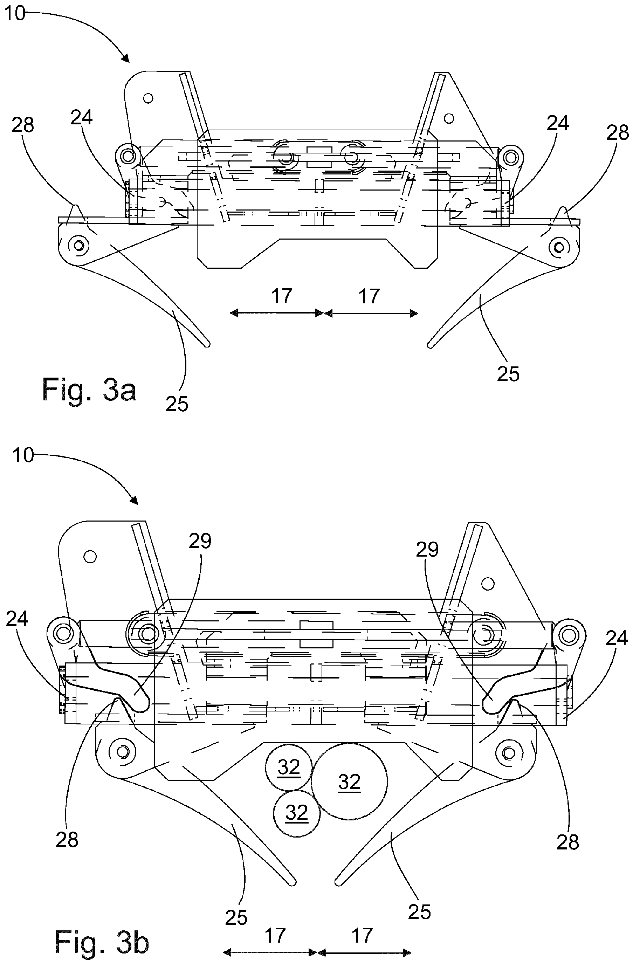

In the following, the invention is described in detail with reference to the attached drawings illustrating an embodiment of the invention, of which
- Figure 1: shows an energy wood grapple equipped with a bunch accumulator in accordance with the invention in an oblique view from the front,
- Figure 2a: shows a bunch accumulator of the invention in an oblique view from the front,
- Figure 2b: shows the bunch accumulator of Figure 2a in an oblique view from the back,
- Figure 3a: shows a bunch accumulator in accordance with the invention in a top view in a completely open position,
- Figure 3b: shows the bunch accumulator of Figure 3a partially closed,
- Figure 4a: shows the bunch accumulator of Figure 3a almost closed,
- Figure 4b: shows the bunch accumulator of Figure 3a completely closed,
- Figure 4c: shows a single collection member of the bunch accumulator in accordance with the invention.
The object of the invention is a bunch accumulator for an energy wood grapple. Figure 1 shows an energy wood grapple on which a bunch accumulator 10 is arranged. In turn, the energy wood grapple is attached to a working machine such as e.g. an excavator or the boom of a forest machine. Figures 2a and 2b only show the bunch accumulator 10. The energy wood grapple includes a frame 11 on which pivotable clamping means 12 are arranged. The clamping means 12 here consist of two pairs of pincers 13 with which segments of energy wood, in the following more simply wood segments are pressed against the frame 11. The energy wood segments are generally only cut from the stem and are dropped into piles. Long segments of energy wood can be cut into several pieces. In addition to the bunch accumulator 10, the energy wood grapple includes cutting means 14. In the embodiment shown, the cutting elements 14 consist of a formed blade 15, which is arranged on the bottom part of the frame 11. When the pairs of pincers 13 are in operation, the wood is pressed against the blade and cut at the same time. The cut segments of wood move over the blade toward the frame. The bunch accumulator in this case takes hold of the cut segments of wood so that the pairs of pincers can be reopened and the energy wood grapple moved to the next trees. When both the pairs of pincers and the bunch accumulator are opened, the segments of wood exit the energy wood grapple. Figures 3a - 4b only show the bunch accumulator in a top view. Generally speaking, the bunch accumulator 10 includes two collection members 16. In the bunch accumulator, an opposite linear motion 17 is provided between the respective collection members 16. In other words, the collection members move in a linear fashion, which renders the action of the collection elements faster and reduces the space required by the bunch accumulator.

The bunch accumulator 10 includes a frame structure 18, which comprises a linear guide 19 and a carriage 20 provided on the linear guide 19, on which carriage 20 a collection member 16 is arranged. In this case, the collection element is supported in a more stable manner than in the past. However, the collection member itself is very mobile. Moreover, the linear guide and carriage are arranged inside a box-like frame structure. The bunch accumulator is thus small in size and self-supporting. In addition, the linear guide and carriage are protected within the frame structure.

In the depicted embodiment, both collection members have their own linear guide. The bunch accumulator 10 accordingly includes two linear guides 19, which are arranged one above the other along the same line. The bunch accumulator thus requires little space in the depth direction. At the same time, the carriage 20 is supported on both linear guides 19, which steadies the motion of the carriage 20. The support can be seen in particular from the right-hand carriage in Figure 2a.

In the depicted embodiment, the linear guides 19 common to the carriages 20 consist of two rods 21, which are supported both at their ends and at their middle on the frame structure 18. The motion of one carriage is thus approximately half the length of the linear guide 19, to be more precise 35 - 50 % of the length of the linear guide 19. The carriage 20 comprises a base plate 22, on the front side of which a collection member 16 is attached. Behind the base plate 22 are two sleeves 23, which are arranged on the rods 21. When the bunch accumulator 10 is in the open position, the base plates 22 partially protrude beyond the frame structure 18 (Figures 2a, 2b and 3a).

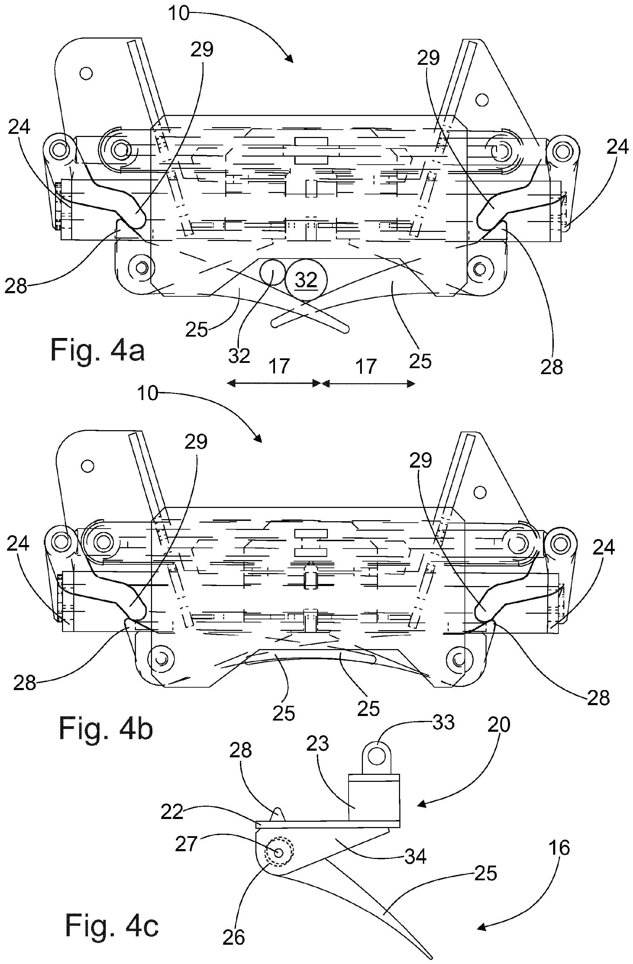

The collection member is used by way of the carriage. Accordingly, an actuating device 24 is arranged between the frame structure 18 and the carriage 20. At the same time, the collection member can include new attributes and the carriage can dampen strains acting on the actuating device. The actuating member is a double-acting hydraulic cylinder here. The sleeves 23 have a bracket 33 for the attachment of the actuating device (Figure 4c).

The working directions of the actuating devices 24 of the carriages 20 are advantageously arranged so as to be opposite. It is thus possible for the actuating devices to fit within the outer dimensions of the frame structure behind the frame structure so that the actuating devices are well protected and the bunch accumulator is compact.

In the depicted embodiment, the collection member 16 is a one-piece claw 25, which is connected to the carriage 20 in an articulated manner. In other words, the location of the point of articulation of the collection member moves back and forth when the collection member is in operation. The size of the jaws formed by the collection members and the frame structure is thus reduced in the lateral as well as in the depth direction, which makes the bunch accumulator fast. The one-piece claw is very mobile and robust. Moreover, the claw 25 can be firmly supported between two brackets 34 in the base plate 22. Moreover, the claw 25 has loading means 26 such as a spring in order to force the claw 25 into the open position. The segments of wood are thus squeezed between the claws and the frame structure with a simple and fast linear motion, but the claws open automatically when the bunch accumulator opens. The spring is shown in Figure 4c. The springloaded claws are pressed inward and then spring outwards when the bunch accumulator is opened.

The bunch accumulator has a particular solution in particular for small segments of wood. At the opposite end of the point of articulation 27 of the claw 25 is a nib 28, the corresponding guide 29 for which is in the frame structure 18 in order to turn the claw 25 into a closed position at the end of a working motion. In the depicted embodiment, the guide consists of a formed guide surface, the guiding influence of which grows. This is evident in particular in Figures 3b, 4a and 4b. In Figure 3b, the nib 28 has just reached the rigid guide 29. The further the carriages move, the more the influence of the guide increases (Figure 4a) and the claws are turned into a closed position even faster. This way, small segments of wood 32 also remain securely under control. At the very end of a working motion, the mechanical guide forces the claws firmly toward the frame structure (Figure 4b). The claws are thus protected without impeding the use of the energy wood grapple.

When freed from the guide, the claw returns to the open position by the force of the return spring. The bunch accumulator thus opens quickly. The claw is also concave, which facilitates the removal of segments of wood from between the claws. Moreover, the claw 25 is tapered at its end. This makes the claw lighter and at the same time allows a slight elasticity in the head of the claw, so that small segments of wood remain tightly in its grip. Larger segments of wood 32 correspond to the wider base part of the claw 25 (Figure 3b) . Moreover, by means of the novel structure, the claws are easy to replace. Maintenance is thus quick or the attributes of the bunch accumulator can be adjusted by changing the claws. The carriage and actuating devices remain unaltered.

The bunch accumulator advantageously includes attachment counter-elements 30 for the attachment of the energy wood grapple. The bunch accumulator can thus also be retrofitted to existing energy wood grapples or other grapples, if necessary. In addition, the bunch accumulator can be removed should it not be needed. In the depicted embodiment, the attachment counter-elements are the holes 31 in the frame structure by means of which the bunch accumulator can be bolted to the energy wood grapple. The attachment counter-elements can also be e.g. brackets that are arranged in a suitable manner. The bunch accumulator is nevertheless rigid and self-supporting so that a few points of attachment suffice. Damage to the wood segments is reduced as there are less instances of processing when the wood segments remain in the bunch accumulator. Moreover, logging efficiency improved significantly in tests. Efficiency improved by up to 30% depending on the method of measurement.

## Claims

1. Bunch accumulator for an energy wood grapple, which bunch accumulator (10) includes two collection members (16), and between the respective collection members (16) is provided an opposite linear motion (17), **characterized in that** the bunch accumulator (10) includes a frame structure (18), which comprises a linear guide (19) and a carriage (20) arranged on the linear guide (19), on which carriage (20) a collection member (16) is arranged, and the collection member (16) is a one-piece claw (25) that is connected to the carriage (20) in an articulated manner.

2. Bunch accumulator according to claim 1, **characterized in that** the bunch accumulator (10) includes two linear guides (19), which are arranged one above the other along the same line.

3. Bunch accumulator according to claim 1 or 2, **characterized in that** the carriage (20) is supported on both linear guides (19).

4. Bunch accumulator according to any of claims 1 - 3, **characterized in that** an actuating device (24) is arranged between the frame structure (18) and the carriage (20).

5. Bunch accumulator according to claim 4, **characterized in that** the working directions of the actuating devices (24) of the carriages (20) are opposite.

6. Bunch accumulator according to any of claims 1 - 7, **characterized in that**, at the opposite end of the point of articulation (27) of the claw (25), there is a nib (28), the corresponding guide (29) of which is in the frame structure (18) in order to turn the claw (25) into a closed position at the end of a working motion.

7. Bunch accumulator according to any of claims 1 - 6, **characterized in that** the claw (25) is concave.

8. Bunch accumulator according to any of claims 1 - 9, **characterized in that** the claw (25) is tapered at its end.

9. Bunch accumulator according to any of claims 1 - 8, **characterized in that** the claw (25) comprises loading means (26) in order to force the claw (25) into an open position.

10. Bunch accumulator according to any of claims 1 - 9, **characterized in that** the bunch accumulator (10) includes attachment counter-elements (30) for attachment to an energy wood grapple.

11. Bunch accumulator according to any of claims 1 - 10, **characterized in that** the motion of the carriage (20) is 35 - 50% of the length of the linear guide (19).

12. Bunch accumulator according to any of claims 1 - 11, **characterized in that** the linear guide (19) is supported on the frame structure (18) both at its ends and at its middle.

13. Energy wood grapple, comprising a frame (11), on which are arranged pivotable clamping means (12) and including cutting means (14) as well as a bunch accumulator (10), **characterized in that** the bunch accumulator (10) is a bunch accumulator in accordance with any of claims 1 - 12.

## Patentansprüche

1. Speicher für Energieholzgreifer, wobei der Speicher (10) zwei Sammelvorrichtungen (16) enthält, und zwischen den entsprechenden Sammelvorrichtungen (16) eine entgegengesetzte Linearbewegung (17) erzeugt wird, **dadurch gekennzeichnet, dass** der Speicher (10) eine Rahmenkonstruktion (18) enthält, die eine Linearschiene (19) und einen auf der Linearschiene (19) angebrachten Führungswagen (20) umfasst, und auf dem Führungswagen (20) eine Sammelvorrichtung (16) angebracht ist, wobei die Sammelvorrichtung (16) aus einer einteiligen Zange (25) besteht, die mit dem Führungswagen (20) gelenkig verbunden ist.

2. Speicher nach Anspruch 1, **dadurch gekennzeichnet, dass** der Speicher (10) zwei Linearschienen (19) enthält, die parallel übereinander angeordnet sind.

3. Speicher nach Anspruch 1 oder 2, **dadurch gekennzeichnet, dass** der Führungswagen (20) auf beiden Linearschienen (19) gestützt wird.

4. Speicher nach einem der Ansprüche 1 - 3, **dadurch gekennzeichnet, dass** eine Stellvorrichtung (24) zwischen der Rahmenkonstruktion (18) und dem Führungswagen (20) angeordnet ist.

5. Speicher nach Anspruch 4, **dadurch gekennzeichnet, dass** die Stellvorrichtungen (24) der Führungswagen (20) in entgegengesetzter Arbeitsrichtung wirksam sind.

6. Speicher nach einem der Ansprüche 1 - 7, **dadurch gekennzeichnet, dass** sich auf der dem Gelenkpunkt (27) der Zange (25) gegenüberliegenden Seite eine Nase (28) befindet, deren zugehörige Schiene (29) sich in der Rahmenkonstruktion (18) befindet, um die Zange (25) nach Abschluss der Arbeitsbewegung in eine geschlossene Position zu schwenken.

7. Speicher nach einem der Ansprüche 1 - 6, **dadurch gekennzeichnet, dass** die Zange (25) konkav gestaltet ist.

8. Speicher nach einem der Ansprüche 1 - 9, **dadurch gekennzeichnet, dass** sich die Zange (25) zum Ende hin verjüngt.

9. Speicher nach einem der Ansprüche 1 - 8, **dadurch gekennzeichnet, dass** die Zange (25) Kraftmittel (26) enthält, welche dazu dienen, die Zange (25) in die geöffnete Position zu zwingen.

10. Speicher nach einem der Ansprüche 1 - 9, **dadurch gekennzeichnet, dass** der Speicher (10) Gegenstücke (30) zur Befestigung an einem Energieholzgreifer enthält.

11. Speicher nach einem der Ansprüche 1 - 10, **dadurch gekennzeichnet, dass** die Bewegung des Führungswagens (20) über 35 - 50 % der Länge der Linearschiene (19) führt.

12. Speicher nach einem der Ansprüche 1 - 11, **dadurch gekennzeichnet, dass** die Linearschiene (19) an beiden Enden und in der Mitte der Rahmenkonstruktion (18) gestützt wird.

13. Energieholzgreifer, einen Rahmen (11) umfassend, an dem schwenkbare Spannmittel (12) angeordnet sind und zu dem Schneidmittel (14) und ein Speicher (10) gehören, **dadurch gekennzeichnet, dass** der Speicher (10) ein Speicher nach einem der Ansprüche 1 - 12 ist.

## Revendications

1. Accumulateur pour grappin à bois d'énergie, lequel accumulateur (10) se compose de deux éléments de collecte (16), et entre les éléments de collecte respectifs (16) se trouve un mouvement linéaire opposé (17), **caractérisé en ce que** l'accumulateur (10) comprend une structure de support (18), qui comporte un guide linéaire (19) et un chariot (20) disposé sur le guide linéaire (19), sur ledit chariot (20) se situe un élément de collecte (16), et ledit élément de collecte (16) représente une pince monobloc (25) qui est reliée au chariot (20) d'une manière articulée.

2. Accumulateur conformément à la revendication 1, caractérisé en ce l'accumulateur (10) comporte deux guides linéaires (19), qui sont disposés l'un au-dessus de l'autre le long d'un même axe.

3. Accumulateur conformément à la revendication 1 ou 2, **caractérisé en ce que** le chariot (20) repose sur les deux guides linéaires (19).

4. Accumulateur conformément à l'une quelconque des revendications 1 à 3, **caractérisé en ce qu'**un dispositif de commande (24) se trouve entre la structure de support (18) et le chariot (20).

5. Accumulateur conformément à la revendication 4, **caractérisé en ce que** les sens de fonctionnement des dispositifs de commande (24) des chariots (20) sont opposés.

6. Accumulateur conformément à l'une quelconque des revendications 1 à 7, **caractérisé en ce que**, au niveau de l'extrémité opposée du point d'articulation (27) de la pince (25), se trouve une pointe (28), dont le guide correspondant (29) se situe dans la structure de support (18) afin de faire pivoter la pince (25) en position fermée à l'extrémité du mouvement de fonctionnement.

7. Accumulateur conformément à l'une quelconque des revendications 1 à 6, **caractérisé en ce que** la pince (25) est concave.

8. Accumulateur conformément à l'une quelconque des revendications 1 à 9, **caractérisé en ce que** la pince (25) est effilée à son extrémité.

9. Accumulateur conformément à l'une quelconque des revendications 1 à 8, **caractérisé en ce que** la pince (25) comporte des moyens de chargement (26) afin de forcer la pince (25) en position ouverte.

10. Accumulateur conformément à l'une quelconque des revendications 1 à 9, **caractérisé en ce que** l'accumulateur (10) comprend des éléments complémentaires de fixation (30) pour la fixation à un grappin à bois d'énergie.

11. Accumulateur conformément à l'une quelconque des revendications 1 à 10, **caractérisé en ce que** le mouvement du chariot (20) représente 35 à 50 % de la longueur du guide linéaire (19).

12. Accumulateur conformément à l'une quelconque des revendications 1 à 11, **caractérisé en ce que** le guide linéaire (19) repose sur la structure de support (18) à la fois à ses extrémités et en son milieu.

13. Grappin à bois d'énergie, se composant d'un châssis (11), sur lequel sont disposés des outils de pinçage pouvant pivoter (12) et y compris des outils de coupe (14) ainsi qu'un accumulateur (10), **caractérisé en ce que** l'accumulateur (10) est un accumulateur conformément à l'une quelconque des revendications 1 à 12.
